(19) Europäisches Patentamt
European Patent Office
Office européen des brevets

(11) **EP 3 877 634 B1**

(12) **EUROPÄISCHE PATENTSCHRIFT**

(45) Veröffentlichungstag und Bekanntmachung des Hinweises auf die Patenterteilung:
**06.07.2022  Patentblatt 2022/27**

(21) Anmeldenummer: **19801526.5**

(22) Anmeldetag: **07.11.2019**

(51) Internationale Patentklassifikation (IPC):
**F01N 3/035** *(2006.01)*     **B01D 46/24** *(2006.01)*
**B01D 53/92** *(2006.01)*     **B01J 37/02** *(2006.01)*

(52) Gemeinsame Patentklassifikation (CPC):
**B01D 53/94; B01D 46/2418; B01D 53/92;**
**B01J 35/04; B01J 37/0232; B01J 37/0244;**
**B01J 37/349; F01N 3/022;** B01D 2255/9155;
F01N 3/035; F01N 2330/00; F01N 2370/22;
Y02T 10/12

(86) Internationale Anmeldenummer:
**PCT/EP2019/080483**

(87) Internationale Veröffentlichungsnummer:
**WO 2020/094763 (14.05.2020 Gazette 2020/20)**

(54) **WANDFLUSSFILTER MIT HOHER FILTRATIONSEFFIZIENZ**

HIGH-FILTRATION EFFICIENCY WALL-FLOW FILTER

FILTRE À PAROIS POREUSES À HAUTE EFFICACITÉ DE FILTRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2018  DE 102018127953**

(43) Veröffentlichungstag der Anmeldung:
**15.09.2021  Patentblatt 2021/37**

(73) Patentinhaber: **UMICORE AG & Co. KG**
**63457 Hanau-Wolfgang (DE)**

(72) Erfinder:
• **GENSCH, Manuel**
 **63743 Aschaffenburg (DE)**
• **FOERSTER, Martin**
 **63654 Büdingen (DE)**
• **DEIBEL, Naina**
 **64319 Pfungstadt (DE)**
• **OLTERSDORF, Antje**
 **79102 Freiburg (DE)**
• **KOCH, Juergen**
 **63457 Hanau (DE)**

(56) Entgegenhaltungen:
**EP-A1- 2 727 640**

EP 3 877 634 B1

**Beschreibung**

Die vorliegende Erfindung richtet sich auf ein Verfahren zur Herstellung eines Wandflussfilters zur Abtrennung von feinpartikulären Feststoffen aus Gasen und dessen Verwendung zur Reinigung von Abgasen eines Verbrennungsmotors. Die Erfindung betrifft ebenfalls einen entsprechend hergestellten Abgasfilter mit einer hohen Filtrationseffizienz.

Das Abgas von Verbrennungsmotoren in Kraftfahrzeugen enthält typischerweise die Schadgase Kohlenmonoxid (CO) und Kohlenwasserstoffe (HC), Stickoxide ($NO_x$) und gegebenenfalls Schwefeloxide ($SO_x$), sowie Partikel, die weitgehend aus festen kohlenstoffhaltigen Teilchen und gegebenenfalls anhaftenden organischen Agglomeraten bestehen. Diese werden als Primäremissionen bezeichnet. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen 1200°C überschreiten. Schwefeloxide resultieren aus der Verbrennung organischer Schwefelverbindungen, die in nicht-synthetischen Kraftstoffen immer in geringen Mengen enthalten sind. Die Einhaltung künftig in Europa, China, Nordamerika und Indien geltender gesetzlicher Abgasgrenzwerte für Kraftfahrzeuge erfordert die weitgehende Entfernung der genannten Schadstoffe aus dem Abgas. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Durchfluss- (flow-through) oder einen Wandfluss- (wall-flow) -wabenkörper mit einer darauf aufgebrachten katalytisch aktiven Beschichtung geleitet wird. Der Katalysator fördert die chemische Reaktion verschiedener Abgaskomponenten unter Bildung unschädlicher Produkte wie beispielsweise Kohlendioxid, Wasser und Stickstoff.

Die eben beschriebenen Durchfluss- oder Wandflusswabenkörper werden auch als Katalysatorträger, Träger oder Substratmonolithe bezeichnet, tragen sie doch die katalytisch aktive Beschichtung auf ihrer Oberfläche bzw. in den diese Oberfläche bildenden Wänden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern hierzu veröffentlicht worden (EP1064094B1, EP2521618B1, WO10015573A2, EP1136462B1, US6478874B1, US4609563A, WO9947260A1, JP5378659B2, EP2415522A1, JP2014205108A2).

Für die jeweils möglichen Methoden der Schadstoffumwandlung im Katalysator ist die Betriebsart des Verbrennungsmotors entscheidend. Dieselmotoren werden meist mit Luftüberschuss betrieben, die meisten Ottomotoren mit einem stöchiometrischen Gemisch aus Ansaugluft und Kraftstoff. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis λ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist λ < 1 (z. B. 0,9) bedeutet dies "Luftmangel", man spricht von einem fetten Abgasgemisch, λ > 1 (z. B. 1,1) bedeutet "Luftüberschuss" und das Abgasgemisch wird als mager bezeichnet. Die Aussage λ = 1,1 bedeutet, dass 10% mehr Luft vorhanden ist, als zur stöchiometrischen Reaktion notwendig wäre.

Sofern im vorliegenden Text von mager verbrennenden Kraftfahrzeugmotoren die Rede ist, so wird hiermit hauptsächlich auf Dieselmotoren und überwiegend im Mittel mager verbrennende Ottomotoren Bezug genommen. Letztere sind überwiegend im Mittel mit magerem A/F-Verhältnis (Luft/Kraftstoff-Verhältnis) betriebene Benzinmotoren. Dagegen werden die meisten Benzinmotoren mit im Mittel stöchiometrischen Verbrennungsgemisch betrieben. Der Ausdruck "im Mittel" nimmt dabei Rücksicht auf die Tatsache, dass moderne Benzinmotoren nicht statisch bei einem festen Luft/Kraftstoffverhältnis (A/F-Verhältnis; λ-Wert) betrieben werden. Vielmehr wird durch die Motorsteuerung ein Gemisch mit einem diskontinuierlichen Verlauf der Luftzahl λ um λ = 1,0 vorgegeben, wodurch sich ein periodischer Wechsel von oxidierenden und reduzierenden Abgasbedingungen ergibt. Dieser Wechsel der Luftzahl λ ist wesentlich für das Abgasreinigungsergebnis. Hierzu wird der λ-Wert des Abgases mit sehr kurzer Zyklenzeit (ca. 0,5 bis 5 Hertz) und einer Amplitude Δλ von 0,005 ≤ Δλ ≤ 0,07 um den Wert λ = 1.0 geregelt. Im Durchschnitt ist in solchen Betriebszuständen daher das Abgas als "im Mittel" stöchiometrisch zu bezeichnen. Damit sich diese Abweichungen nicht nachteilig auf das Abgasreinigungsergebnis bei Überleiten des Abgases über den Dreiwegkatalysator auswirken, gleichen die im Dreiwegkatalysator enthaltenen Sauerstoffspeichermaterialien diese Abweichungen aus, indem sie Sauerstoff nach Bedarf aus dem Abgas aufnehmen oder ins Abgas abgeben (R. Heck et al., Catalytic Air Pollution Control - Commercial Technology, Wiley, 2. Auflage 2002, Seite 87). Aufgrund der dynamischen Betriebsweise des Motors im Fahrzeug treten zeitweise jedoch weitere Abweichungen von diesem Zustand auf. Zum Beispiel bei starken Beschleunigungen oder im Schubbetrieb können Betriebszustände des Motors und damit des Abgases eingestellt werden, die im Mittel über- oder unterstöchiometrisch sein können. Mager verbrennende Ottomotoren weisen dagegen ein Abgas auf, welches überwiegend, d.h. in der überwiegenden Zeit des Verbrennungsbetriebs ein im Mittel mageres Luft/Kraftstoffverhältnis verbrennt.

Die Schadgase Kohlenmonoxid und Kohlenwasserstoffe können aus einem mageren Abgas durch Oxidation an einem geeigneten Oxidationskatalysator unschädlich gemacht werden. Bei einem stöchiometrisch betriebenen Verbrennungsmotor können alle drei Schadgase (HC, CO und NOx) über einen Dreiwegkatalysator beseitigt werden.

Die Reduktion der Stickoxide zu Stickstoff ("Entstickung" des Abgases) ist wegen des hohen Sauerstoffgehaltes eines mager verbrennenden Motors schwieriger. Ein bekanntes Verfahren ist hier die selektive katalytische Reduktion der Stickoxide (Selective Catalytic Reduction; SCR) an einem geeigneten Katalysator, kurz SCR-Katalysator genannt. Dieses Verfahren gilt gegenwärtig für die Entstickung von Magermotorenabgasen als bevorzugt. Die Verminderung der im Abgas enthaltenen Stickoxide erfolgt im SCR-Verfahren unter Zuhilfenahme eines aus einer externen Quelle in den Abgasstrang eindosierten Reduktionsmittels. Als Reduktionsmittel wird Ammoniak eingesetzt, welches die im Abgas vorhandenen Stickoxide am SCR-Katalysator zu Stickstoff und Wasser umsetzt. Das als Reduktionsmittel verwendete Ammoniak kann durch Eindosieren einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Zur Entfernung der Partikelemissionen sind Dieselpartikelfilter (DPF) bzw. Benzinpartikelfilter (GPF) mit und ohne zusätzliche katalytisch aktive Beschichtung geeignete Aggregate. Zur Erfüllung der gesetzlichen Normen ist es für die aktuellen und zukünftigen Applikationen zur Abgasnachbehandlung von Verbrennungsmotoren aus Kostengründen aber auch aus Bauraumgründen wünschenswert, Partikelfilter - insbesondere solche vom Wandflusstyp - mit anderen katalytisch aktiven Funktionalitäten zu kombinieren. Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und dennoch möglichst geringen Abgasgegendruck aufweisen. Zum einen hat es sich als günstig erwiesen, wenn die katalytisch aktive Beschichtung nicht als Schicht auf der Wand eines porösen Wandflussfilters befindlich ist, sondern die Wand des Filters mit dem katalytisch aktiven Material zu durchsetzen (WO2005016497A1, JPH01-151706, EP1789190B1). Hierfür wird die Partikelgröße der katalytischen Beschichtung so gewählt, dass die Partikel in die Poren der Wandflussfilter eindringen und dort durch Kalzinieren fixiert werden können.

Eine weitere Funktionalität des Filters, die durch eine Beschichtung verbessert werden kann, ist seine Filtrationseffizienz, also die Filterwirkung selbst. Die Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkon, Aluminium oder Silicium, bevorzugt in Faserform von 1 nm bis 5 $\mu$m und haben eine Schichtdicke von mehr als 10 $\mu$m, in der Regel 25 $\mu$m bis 75 $\mu$m. Nach dem Beschichtungsprozess werden die aufgetragenen Pulverpartikel in einem Wärmeprozess kalziniert.

Eine Beschichtung innerhalb der Poren eines Wandflussfilteraggregats mittels Verdüsung von trockenen Partikeln wird in der US8388721B2 beschrieben. Hier soll allerdings das Pulver tief in die Poren eindringen. 20 % bis 60 % der Oberfläche der Wand soll für Rußpartikel zugänglich, demnach offenbleiben. Abhängig von der Strömungsgeschwindigkeit des Pulver-Gas-Gemisches kann ein mehr oder minder starker Pulvergradient zwischen Einlass- und Auslassseite eingestellt werden.

Ebenfalls wird die Einbringung des Pulvers in die Poren, z. B. mithilfe eines Aerosolgenerators, in der EP2727640A1 beschrieben. Hier wird ein nicht katalytisch beschichteter Wandflussfilter mit einem z. B. Aluminiumoxidpartikel enthaltenden Gasstroms dergestalt beschichtet, dass die kompletten Partikel, die eine Partikelgröße von 0,1 $\mu$m bis 5 $\mu$m aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10 % bis 50 % des Volumens der gefüllten Poren in den Kanalwänden aus. Dieser Filter weist sowohl mit Ruß beladen wie auch ohne Ruß eine gegenüber dem unbehandelten Filter verbesserte Filtrationseffizienz bei einem geringeren Abgasgegendruck des mit Ruß beladenen Filters auf.

In der EP2502661A1 und EP2502662B1 werden weitere Verfahren zur Aufwandbeschichtung von Filtern durch Pulverapplikation erwähnt. Dort werden auch entsprechende Apparaturen zur Beaufschlagung des Filters mit einem Pulver-Gas-Aerosol gezeigt, bei dem der Pulverapplikator und der Wandflussfilter jeweils separiert sind, so dass durch diesen Zwischenraum während des Beschichtens Luft eingesaugt wird. Ein weiteres Verfahren bei dem zur Erhöhung der Filtrationseffizienz von katalytisch nicht aktiven Wandflussfiltern eine Membran ("Trapping layer") auf den Oberflächen der Einlasskanäle von Filtern erzeugt wird, ist in der Patentschrift US8277880B2 beschrieben. Die Filtrationsmembran auf den Oberflächen der Einlasskanäle wird durch Durchsaugen eines mit Keramikpartikeln (z. B. Siliciumcarbid, Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen.

In der WO2011151711A1 wird eine Methode beschrieben, mit der ein nicht beschichteter oder katalytisch beschichteter Filter mit einem trockenen Aerosol beaufschlagt wird. Das Aerosol wird durch die Verteilung eines pulverförmigen hochschmelzenden Metalloxids mit einer mittleren Partikelgröße von 0,2 $\mu$m bis 5 $\mu$m bereitgestellt und mittels eines Gasstroms über die Einlassseite eines Wandflussfilters geführt. Hierbei agglomerieren die einzelnen Partikel zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Die EP1576998A2 beschreibt die Herstellung einer dünnen Membran, <5$\mu$m, auf der Ausgangsseite der porösen Zellwand. Die poröse Membran wird aus Nanopartikeln mit Durchmessern zwischen 20 und 200 nm hergestellt. Zur Fixierung der Membran auf der Auslassseite des Wandflussfilters erfolgt hier eine abschließende Kalzinierung.

US9745227B2 beschreibt die Herstellung eines Aufwandlayers mit porösen Partikelagglomeraten mit einem Durchmesser zwischen 10 und 200 $\mu$m. Diese Agglomerate wiederum werden in einem vorgelagerten Prozess aus Partikel mit Abmessungen zwischen 0,01 bis 5 $\mu$m hergestellt. Der aufgebrachte Layer muss anschließend noch kalziniert werden.

Die WO18115900A1 nennt die oxidischen Pulver synthetische Asche mit einem d90 < 1 $\mu$m. Damit werden die Filter dergestalt beschichtet, dass ein gepacktes Bett an synthetischer Asche auf den Filterwänden entsteht.

Es sind aber weitergehende Anforderungen für Partikelfilter vorhanden, für die Lösungen immer noch gesucht werden. Dies betrifft z.B. den verbesserten Rußabbrand und die Einbringung zusätzlicher reaktiver Zonen zur Steuerung der katalytischen Reaktionen.

Die Aufgabe der vorliegenden Erfindung war demnach, weitere und verbesserte Partikelfilter, auch Wandflussfilter genannt, anzugeben, die hinsichtlich ihrer Filtrationseffizienz und dem resultierenden Abgasgegendruck optimiert sind. Darüber hinaus sollten die Filter in einem robusten und flexiblen Arbeitsprozess leicht herstellbar und kostengünstig sein.

Diese und weitere Aufgaben, die sich für den Fachmann in naheliegender Weise aus dem Stand der Technik ergeben, werden durch ein Verfahren gemäß dem unabhängigen Anspruch 1 gelöst. Bevorzugte Ausführungsformen des Verfahrens befinden sich in den von Anspruch 1 abhängigen Unteransprüchen. Anspruch 10 ist auf einen entsprechend hergestellten Wandflussfilter gerichtet. Anspruch 11 beinhaltet eine bevorzugte Verwendung.

Dadurch, dass man in einem Verfahren zur Herstellung eines Wandflussfilters zur Reinigung von Gasen von kleinpartikulären Feststoffen, den Einlassbereich des trockenen Filters mit einem trockenen Pulver-Gas-Aerosol beaufschlagt, wobei das Pulver eine pyrogene, durch eine Flammenhydrolyse oder Flammenoxidation aus einem Metallprecursor in einer Flamme hergestellte, hochschmelzende Metallverbindung aufweist und die Menge an pyrogener hochschmelzender Verbindung im Filter unter 5 g/l liegt, gelangt man überaus vorteilhaft zur Lösung der gestellten Aufgabe. Die erfindungsgemäß hergestellten Wandflussfilter finden bevorzugt Einsatz in der Reinigung von Abgasen von Verbrennungsmotoren. Sie filtern den während der Verbrennung gebildeten Ruß aus dem Abgas heraus und führen dabei nur zu einer geringen Erhöhung des Abgasgegendrucks. Dieses Ergebnis kann dabei bereits mit relativ wenig pyrogenem Material erreicht werden. Dies war vor dem Hintergrund des bekannten Standes der Technik so nicht zu erwarten.

Das Beaufschlagen des trockenen, ggf. katalytisch beschichteten Filters mit dem trockenen Pulver-Gas-Aerosol führt dazu, dass sich die pulverförmigen, pyrogenen Metallverbindungen dem Strom des Gases folgend auf der Oberfläche der Eingangsseite des Filters und ggf. in den Poren des Filters abscheiden. Im Prinzip weiß der Fachmann, wie er ein Aerosol aus einem pyrogenen Pulver und einem Gas herzustellen hat, um dieses dann durch den mit dem Pulver zu beaufschlagenden Filter zu leiten. Vorteilhaft wird zur Herstellung eines Wandflussfilters ein trockener Filter auf dessen Eingangsoberfläche mit dem trockenen, pyrogenen Pulver-Gas-Aerosol beaufschlagt, indem man das Pulver in einem Gas dispergiert, anschließend in einen Gasstrom leitet und ohne weitere Zufuhr eines Gases in die Einlassseite des Filters saugt oder drückt. Aus Gründen des Arbeitsschutzes ist das Saugen dem Drücken vorzuziehen.

Das Aerosol aus dem Gas und der pyrogenen Metallverbindung kann nach Maßgabe des Fachmannes hergestellt werden. Hierzu wird gemeinhin ein pyrogen hergestelltes Metallpulver mit einem Gas vermischt (http://www.tsi.com/Aerosolgeneratoren-und-disperqierer/; https://www.palas.de/de/product/aerosolqeneratorssolidparticles). Dieses so hergestellte Gemisch aus dem Gas und dem Pulver wird dann vorteilhafter Weise über einen Gasstrom in die Einlassseite des Wandflussfilters geführt. Unter Einlassseite wird der durch die Anströmkanäle/Eingangskanäle gebildete Teil des Filters gesehen. Die Eingangsoberfläche wird durch die Wandoberflächen der Anströmkanäle/Eingangskanäle auf der Eingangsseite des Wandflussfilters gebildet. Für die Auslassseite gilt entsprechendes.

Als Gase zur Herstellung des Aerosols und zum Eintragen in den Filter können alle dem Fachmann für den vorliegenden Zweck infrage kommende Gase herangezogen werden. Ganz besonders bevorzugt ist der Einsatz von Luft. Es können jedoch auch andere Reaktionsgase herangezogen werden, die entweder eine oxidierende (z.B. $O_2$, $NO_2$) oder eine reduzierende (z.B. H2) Aktivität gegenüber dem eingesetzten Pulver entwickeln können. Ebenfalls kann sich bei bestimmten Pulvern der Einsatz von Inertgasen (z.B. N2) oder Edelgasen (z.B. He) als vorteilhaft erweisen. Auch Mischungen der aufgezählten Gase sind vorstellbar.

Um das Pulver ausreichend gut auf und/oder in der Oberfläche der Filterwand auf der Einlassseite des Filters abscheiden zu können, ist eine gewisse Saugleistung bzw. Druckleistung von Nöten. Der Fachmann kann sich hier in orientierenden Versuchen für den jeweiligen Filter und das jeweilige Pulver selbst ein Bild machen. Es hat sich herausgestellt, dass das Aerosol (Pulver-Gas-Gemisch) vorzugsweise mit einer Geschwindigkeit von 5 m/s bis 60 m/s, mehr bevorzugt 10 m/s bis 50 m/s und ganz besonders bevorzugt 15 m/s bis 40 m/s durch den Filter gesaugt wird, da dies den späteren Abgasgeschwindigkeiten entspricht. Hierdurch wird ebenfalls eine vorteilhafte Adhäsion des applizierten Pulvers erreicht. Äußerst bevorzugt werden Gasgeschwindigkeiten verwendet, die denen des späteren zu reinigenden Abgases entsprechen. Durch die Verwendung von bestimmten Gasgeschwindigkeiten vor dem Filter während der Beschichtung im Bereich der späteren Abgasgeschwindigkeiten vor dem Filter ergibt sich eine Pulververteilung und damit eine Verteilung der filtrierenden Oberfläche im Filter, die optimal zum Partikelstrom im Abgas passt. Die Geschwindigkeiten werden den Erfordernissen im jeweiligen Anwendungsfall des Filters im Rahmen der Erfindung angepasst. Dies bedeutet für Filter mit einer gleichmäßigen Permeabiltätsverteilung über den Filter, dass in der Regel im letzten Drittel des Filters in Strömungsrichtung mehr Pulver abgeschieden wird. Bei ungleichmäßigen Permeabilitätsverteilung im Filter, z.B. durch Zonenbeschichtungen bedeutet dies in der Regel, dass das Pulver bevorzugt in den Bereichen hoher Permeabilität abgeschieden wird, da der Volumenstrom bei der Beschichtung aber auch später im Einsatz als Abgasfilter im Bereich hoher Permeabilität auch am höchsten ist.

Die Menge an Pulver im Filter hängt von der Art des Pulvers und den Dimensionen des Filters ab und kann unter den gegebenen Randbedingungen (nicht zu hoher Abgasgegendruck) vom Fachmann in vorläufigen Versuchen bestimmt werden. In der Regel und erfindungsgemäß liegt die Beladung des Filters mit dem pyrogenen Pulver bei unter 5 g/l bezogen auf das Filtervolumen. Bevorzugt beträgt der Wert nicht mehr als 3 g/l, ganz besonders bevorzugt nicht mehr als 2 g/l. Eine untere Grenze bildet naturgemäß die angestrebte Erhöhung der Filtrationseffizienz. Besonders bevorzugt in diesem Zusammenhang ist, wenn die Menge an im Filter verbleibendem Pulver unterhalb von 2g/l liegt.

Durch die Beaufschlagung des Filters mit dem speziellen Pulver-Gas-Aerosol lässt sich die Filtrationseffizienz bzw. der Abgasgegendruck des Filters mit ggf. zusätzlichen katalytischen Funktionen gut auf die jeweiligen Gegebenheiten im Abgasstrang z.B. eines Automobils einstellen. Die Entwicklung der jeweils den unterschiedlichen Anforderungen angepassten Designs ist kostengünstig und flexibel. Auch ist der Herstellprozess kostengünstig, da man in der gleichen Anlage z.B. mit zwei und mehr Applikatoren zeitlich direkt hintereinander nur um sekundenbruchteile getrennt mehrere unterschiedliche Pulvertypen, welche ggf. unterschiedliche Funktionen ausüben, aufgeben kann.

Die hier beschriebenen ggf. vorher katalytisch beschichteten und anschließend mit pyrogenen Pulvern beaufschlagten Filter unterscheiden sich von denen, die im Abgasstrang eines Fahrzeugs durch Ascheablagerung während des Betriebs entstehen. Erfindungsgemäß werden die ggf. katalytisch aktiven Filter gezielt mit einem bestimmten, trockenen Pulver in Form eines pyrogen hergestellten Materials, z.B. eines Metalloxids bestäubt. Dies führt dazu, dass die Balance zwischen Filtrationseffizienz und Abgasgegendruck von Anfang an gezielt eingestellt werden kann. Nicht mitumfasst von der vorliegenden Erfindung sind daher Wandflussfilter, bei denen mehr oder weniger undefinierte Ascheablagerungen aus der Verbrennung von Kraftstoff z.B. im Zylinder während des Fahrbetriebs oder mittels eines Brenners erfolgt sind.

Als Wandflussmonolithe oder Wandflussfilter können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die Porosität der unbeschichteten Wandflussfilter beträgt in der Regel mehr als 40 %, generell von 40 % bis 75 %, besonders von 50 % bis 70 % [gemessen nach DIN 66133 - neueste Fassung am Anmeldetag]. Die durchschnittliche Porengröße (mittlerer Porendurchmesser; d50) der unbeschichteten Filter beträgt wenigstens 7 $\mu$m, z. B. von 7 $\mu$m bis 34 $\mu$m, bevorzugt mehr als 10 $\mu$m, insbesondere mehr bevorzugt von 10 $\mu$m bis 25 $\mu$m oder ganz bevorzugt von 15 $\mu$m bis 20 $\mu$m [gemessen nach DIN 66134 neueste Fassung am Anmeldetag]. Die fertiggestellten Filter mit einer Porengröße (d50) von in der Regel 10 $\mu$m bis 20 $\mu$m und einer Porosität von 50 % bis 65 % sind besonders bevorzugt.

Allgemein und erfindungsgemäß versteht man unter pyrogen hergestellten Metallpulvern solche, die durch eine Flammenhydrolyse oder Flammenoxidation aus einem Metallprecursor in einer Flamme erhalten werden und Eigenschaften aufweisen, wie sie für flammensynthetesierte partikuläre Produkte in folgenden Literaturstellen beschrieben werden, Gutsch A. et al. (2002) KONA (No. 20); Li S. et al. (2016) Progress in Energy and Combustion Science (55); Ulrich G. (1971) Combsution Science and Technology (Vol. 4). Solche Verfahren werden großtechnisch schon seit 1944 z.B. bei der Degussa AG herstellt. Die ersten Patente dazu stammen aus den Jahren 1931 bis 1954 (US1967235A, US2488440A, DE948415C, DE952891C). Pyrogene Kieselsäure (https://de.wikipedia.org/w/index.php?title=Pyrogenes Siliciumdioxid&oldid=182147815) wird z.B. durch die Firma Evonik unter dem Namen Aerosil® oder pyrogenes Aluminiumoxid unter dem Namen Aeroxide® (https://www.aerosil.com/product/aerosil/downloads/ti-1331-aerosil-and-aeroxide-for-glossy-photo-inkjet-media-en.pdf) vertrieben. Ganz allgemein lassen sich mittels dieses Verfahrens hochoberflächige Verbindungen, insbesondere Oxide verschiedener Metalle mit sehr niedriger Stampfdichte <100 kg/m$^3$, bevorzugt <80 kg/m$^3$ und ganz bevorzugt <60 kg/m$^3$ herstellen (gemessen nach Norm DIN EN ISO 787-11 - neueste Fassung am Anmeldetag) und erfindungsgemäß bevorzugt einsetzen. Dabei liegt die Porosität dieser pyrogenen Materialien, z.B. der Metalloxide bei >90 %, vorzugsweise > 93 % und ganz bevorzugt > 95 %. Diese wird ermittelt aus dem Verhältnis der Stampfdichte zur Primärpartikeldichte bzw. der wahren nichtporösen Dichte der jeweiligen Oxide. Die Formel dazu lautet:

$$\text{Porosität} = 1 - \text{Stampfdichte} / \text{wahre Dichte}$$

Am Beispiel von Aluminiumoxid ist die wahre Dichte (https://de.wikipedia.org/w/index.php?title=Reindichte&oldid=164022376) 3200 bis 3600kg/m$^3$ und die Stampfdichte der pyrogenen Oxide beträgt nur ca. 50kg/m$^3$. Somit ergibt sich, dass 1 m$^3$ Pulver nur ca. 1,5% Aluminiumoxid enthält. Vorteilhaft sind dies z.B. solche ausgewählt aus der Gruppe bestehend aus Siliziumdioxid, Aluminiumoxid, Titandioxid, Zirkondioxid, Ceroxid Eisenoxid, Zinkoxid oder deren Mischoxide oder Mischungen davon. Es lassen sich jedoch auch noch andere pyrogene Oxide, Mischoxide (so genannte feste Lösungen) oder dotierte Mischoxide herstellen.

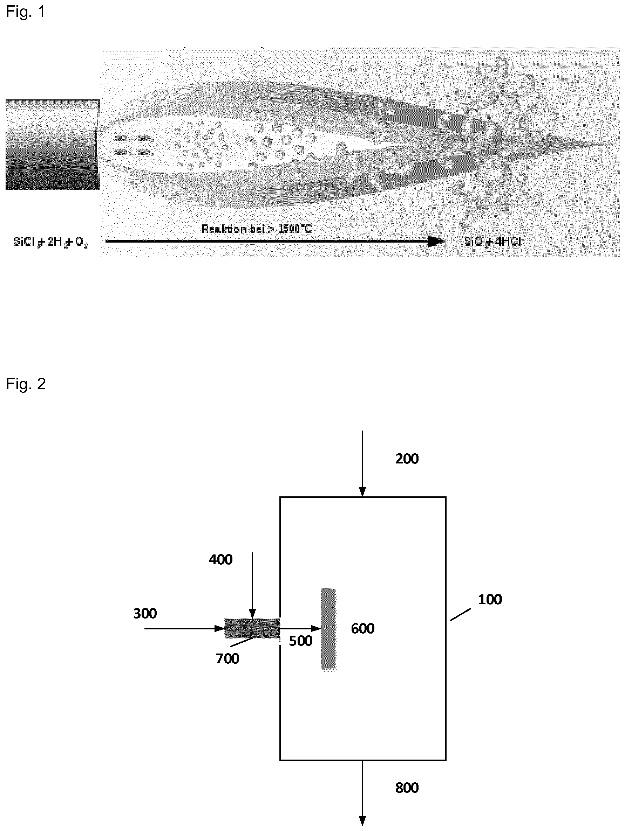

Bei der Flammenpyrolyse entstehen zunächst annähernd sphärische Primärpartikel im Nanometerbereich (d50: 5 - 50 nm), die während der weiteren Reaktion zu hochporösen kettenförmigen Aggregaten zusammensintern. Die Aggregate besitzen üblicherweise eine mittlere Partikelgröße (d50) von <0,5 $\mu$m und können sich anschließend zu Agglomeraten mit einer mittleren Partikelgröße von 10 - 100 $\mu$m zusammenballen (Fig. 1, (https://de.wikipedia.org/wiki/Pyrogenes Siliciumdioxid)). Im Gegensatz zu den Agglomeraten, die sich durch Eintrag von Energie in der Regel relativ leicht in die Aggregate trennen lassen, werden die Aggregate nur durch intensiven Eintrag von Energie weiter in die Primärpartikel zerlegt (Manuel Gensch, Dissertation, Mechanische Stabilität von Nanopartikel-Agglomeraten bei mechanischen Belastungen, ISBN: 978-3-8440-6110-9, Shaker Verlag). Vorliegend werden die Partikelgrößen sowohl offline mittels Laserbeugung gemäß der gängigen Norm ISO 13320 (neuste Fassung am Anmeldetag). Sofern im vorliegenden Text von einem d50-Wert für Partikel gesprochen wird, ist damit der d50-Wert einer $Q_3$-Verteilung gemeint.

Erfindungsgemäß bevorzugt ist daher ein Verfahren, bei dem die pyrogene hochschmelzende Verbindung vor der Beaufschlagung des Filters einerfluiddynamischen Beanspruchung ausgesetzt wird (Scherkraft). Je nach Intensität der Scherkraft kann man daher bei dieser Abwandlung erreichen, dass das Pulver deagglomeriert oder/oder deaggregiert wird. Das Pulver kann so entweder nur auf der Wand des Wandflussfilters, auf und in dessen Wand oder ausschließlich in der Wand abgeschieden werden. Hierdurch kann der Wandflussfilter gut auf das zugrundeliegende Reinigungsproblem (z.B. Filterung von kleinpartikuläre oder eher großpartikuläre Rußen aus dem Abgas eines Verbrennungsmotors) angepasst werden. Die Stärke der Scherkraft kann aus Vorversuchen ermittelt werden. Die untere Grenze der Scherkraft wird dort zu finden sein, ab der die Agglomerate der pyrogenen Verbindung in kleinere Kompartimente gespalten werden können.

Eine Obergrenze wird diesbezüglich die Teilung der Aggregate in kleinere Einheiten bis hin zu den Primärpartikeln bilden.

Die Scherkraft, die auf das Pulver ausgeübt wird, kann mit dem Fachmann bekannten Mitteln hervorgerufen werden. Um die Pulver z.B. vermehrt auch in die Poren des Filters zu bekommen, sollten zumindest einige Partikeldurchmesser des Pulvers kleiner als die Porendurchmesser des Wandflussfilters sein. Die Partikeldurchmesser der Agglomerate kann man durch die dem Fachmann bekannten Mahlschritte für oxidische Pulver reduzieren. Für die pyrogenen Materialien, deren Nutzung dieser Erfindung zu Grunde liegen, sind als Verfahren zur Einbringung der Scherkraft solche mit Scherung und/oder Prallbeanspruchungen bevorzugt. Zerstäuberdüsen gehören z.B. zu den Verfahren mit starker Scherung. Windsichter, Gegenstrahlmühlen und die Impaktion auf Prallplatten gehören dagegen zu den Verfahren, die das Aufbrechen der Agglomerate von pyrogenen Oxiden überwiegend durch Prallbeanspruchung erledigen. Vorzugsweise wird die Scherkraft daher hervorgerufen durch eine oder mehrere Geräte ausgewählt aus der Gruppe bestehend aus verschleißfreie Zerstäuberdüse, Windsichter, Mühle und Prallplatte.

Durch den erfindungsgemäß ganz bevorzugten Einsatz von scherenden und verschleißgeschützen Zerstäuberdüsen in Kombination z.B. mit einer Prallplatte können die benötigten Partikelgrößen im Prozess während der Beschichtung hergestellt werden (Break-Up and bounce of TiO2 agglomerates by impaction, Ihalainen, M.; Lind, T.; Arffman, A.; Torvela, T.; Jokiniemi, J. In: Aerosol Science and Technology, Vol. 48, No. 1, 2014, p. 31-41; Interparticle forces in silica nanoparticle agglomerates (English) Seipenbusch, M. Rothenbacher, S. Kirchhoff, M. Schmid, H.-J. Kasper, G. Weber, A. P. in Journal of Nanoparticle Research; 12, 6; 2037-2044; Manuel Gensch, Dissertation, Mechanische Stabilität von Nanopartikel-Agglomeraten bei mechanischen Belastungen, ISBN: 978-3-8440-6110-9, Shaker Verlag; Trockene Desagglomeration von Nanopartikelagglomeraten in einer Sichtermühle, Sascha Füchsel*, Klaus Husemann und Urs Peuker, Chemie Ingenieur Technik 2011, 83, No. 8, 1262-1275).

Die Partikelagglomerate werden hierbei z.B. durch die verschleißgeschützte Zerstäuberdüse Sekundenbruchteile vor der Beaufschlagung des Filters auf einen d50 von z.B. ca. 2 bis 8 $\mu$m zerkleinert. Hierdurch und durch eine Verdünnung des Aerosols mit einem zusätzlichen Transportgas wird eine erneute Agglomeration vermieden. Bei einem Bedarf an noch feineren Partikel wird vorteilhaft eine zusätzliche Prallplattendispergierung eingesetzt. Auch hier wird die Dispergierung Sekundenbruchteile vor der Beschichtung durchgeführt, so dass eine erneute Agglomeration der Teilchen vermieden wird. Durch den Massenstrom und die Aufprallgeschwindigkeit auf die Prallplatte lassen sich die Partikelgrößen ggf. kontinuierlich verändern. Diese beiden Dispergiermethoden in Verbindung mit dem Einsatz der pyrogenen Metallverbindungen ermöglichen einen schnell veränderbaren, flexiblen und kostengünstigen Prozess, der an die verschiedenen Filterqualitäten bzw. -anforderungen angepasst werden kann.

Durch die hier dargestellten Techniken lassen sich die Partikelgrößen, welche für den vorliegenden Zweck in Frage kommen, sehr genau einstellen. Vorzugsweise liegen die Partikelgrößen (d50) der pyrogenen Metallverbindungen, insbesondere der Metalloxide, bei einer Beaufschlagung in den Poren des Wandflussfilters im Bereich der Größe der Primärpartikel bei 1 - 100 nm, vorzugsweise bei 10 - 80 nm und ganz bevorzugt bei 20 - 50 nm. Dies führt dazu, dass sich diese Partikel auch in einer ausreichenden Menge in den oberflächlich gelegenen Poren des Wandflussfilters einlagern können. Ist - wie gesagt - eine Einlagerung des Pulvers in die Poren nicht gewünscht, liegt der d50-Wert eher bei 0,5 - 100, mehr bevorzugt 1 - 50 und ganz bevorzugt 5 - 20 $\mu$m. Auch Mischungen beider Größenregimes während der Beaufschlagung, ggf. zeitlich versetzt, sind denkbar. In der Regel wird sich die Partikelgrößenverteilung des Pulvers vor der Beaufschlagung vorzugsweise in einem Bereich von 0,1 - 50 $\mu$m (d50) bewegen.

Die Oberfläche der Partikel im Pulver ist dabei sehr hoch. Vorteilhaft besitzt die pyrogene hochschmelzende Verbindung eine BET-Oberfläche von > 50 m2/g, mehr bevorzugt > 70 m2/g und ganz bevorzugt > 900 m2/g aufweist. Die Bestimmung der BET-Oberfläche erfolgt dabei nach DIN ISO 9277:2003-05 (Bestimmung der spezifischen Oberfläche von Feststoffen durch Gasadsorption nach dem BET-Verfahren). Die nahezu porenfreien Primärpartikel mit einem Partikeldurchmesser von < 100 nm erzeugen sogar eine hohe spezifische Oberfläche von bis zu über 200 $m^2$/g, die für die Abscheidung der Nanopartikel zur Verfügung steht.

In der Tabelle 1 ist die Abhängigkeit der äußeren Oberfläche von der Partikelgröße dargestellt. Für die Berechnung wurde die wahre nichtporöse Dichte von Aluminiumoxid mit 3600kg/$m^3$ und die Partikelform als Kugel angenommen.

| | | Partikeldurchmesser (d50) [µm] | | | | | | | |
|---|---|---|---|---|---|---|---|---|---|
| | | 8 | 4 | 2 | 1 | 0,5 | 0,1 | 0,03 | 0,01 |
| äußere Oberfläche | m²/g | 0,2 | 0,4 | 0,8 | 1,7 | 3,3 | 16,7 | 55,6 | 166,7 |

*grau: Bereich der pyrogenen Metallverbindung: Primärpartikeldurchmesser <100nm*

Die hohe äußere Oberfläche bietet eine hervorragende Abscheidefläche für die Partikel, insbesondere Rußpartikel im Nanometerbereich. Die niedrige Stampfdichte der pyrogenen Metallverbindung und die nahezu porenfreien Primärpartikel bedeutet eine extrem hohe Porosität, die für die Strömung zur Verfügung steht. Damit ist der Druckanstieg durch das pyrogene Pulver auf dem Filter sehr niedrig.

In der Tabelle 2 sind beispielhaft einige Daten der pyrogenen Oxide im Vergleich zu üblichen hochporösen Aluminiumoxiden wie Puralox® von der Firma Sasol dargestellt.

Tabelle 2: Kenndaten beispielhaft für ein von der Evonik hergestelltes pyrogenes Aluminiumoxid zusammengestellt. Das pyrogene Aluminiumoxid C hat eine Primärpartikelgröße von 13 nm. Die Dichte der Primärpartikel liegt bei etwa 3200g/l. Als Vergleich wurde hier Puralox von Sasol herangezogen.

| | Porosität | BET-Oberfläche | Stampfdichte | mittlere Primärkorngröße | mittlere Agglomeratgröße je nach Scherenergie |
|---|---|---|---|---|---|
| | | $m^2/g$ | g/Liter | nm | $\mu m$ |
| Pyrogenes Aluminiumoxid C | 98,5% | ca. 100 | ca 50 | 13 | 1 bis 10 |
| handelsübliche hochporöse Aluminiumoxide in der Katalyse | ca. 80% | bis über 200 | ca. 600 - 1200 | >1000 | ungemahlen 20 bis 50 |

In einer speziellen Ausführung der Erfindung können die ggf. katalytisch aktivierten pyrogenen hochschmelzenden Verbindungen im Pulver-Gas-Aerosol mit weiteren nichtpyrogenen hochschmelzenden Verbindungen gemischt werden. Dabei werden vorteilhafterweise die pyrogenen Metallverbindungen vor deren Verbringung in den Wandflussfilter auch mit anderen nicht pyrogenen Materialen, z.B. Oxiden ausgewählt aus der Gruppe bestehend aus Siliziumdioxid, Aluminiumoxid, Titandioxid, Zirkondioxid, Ceroxid, Eisenoxid, Zinkoxid oder deren Mischoxide oder Mischungen davon ggf. mit Edelmetall beschichtet Oxiden oder ggf. ionen-ausgetauschten Zeolithen und vieles mehr gemischt. Mischoxide mit anderen Metallen wie z.B. Eisen auf Basis der oben genannten Gruppe können katalytisch interessante Eigenschaften für spezielle Reaktionsabläufe darstellen. Hierdurch werden die durch die pyrogenen Materialien hervorgerufene gute Filtrationseigenschaft und der niedrige Druckverlust weitestgehend erhalten, während die anderen nichtpyrogenen Materialien zusätzliche katalytische Eigenschaften liefern können. Demzufolge ist es auch bevorzugt möglich, die pyrogen hergestellten Metalloxidpulver mit den anderen Metalloxidpulvern zu vermischen und anschließend den Wandflussfilter damit zu beaufschlagen. Dabei können die einzelnen Pulver jeweils für sich oder beide Pulver zusammen katalytische Aktivität, z.B. durch Edelmetallzugabe bedingt, aufweisen. Dies ermöglicht einen preiswerten Standardprozess für eine Vielzahl von Eigenschaften des Produkts. Die starke Vernetzung der pyrogenen Verbindungen führt auch dazu, dass Mischungen von pyrogenen Metallverbindungen mit üblichen nicht pyrogenen Materialien z.B. Metalloxiden mit geringer äußerer Oberfläche zu den gleichen Vorteilen bezüglich Filtrationseffizienz und Druckverlust führen, aber die Mengen an Pulver können deutlich reduziert werden.

In einer bevorzugten Ausführungsform kann der Filter vor der Beaufschlagung mit dem Pulver-Gas-Aerosol katalytisch beschichtet worden sein. Unter katalytischer Beschichtung wird vorliegend die Fähigkeit verstanden, schädlich Bestandteile des Abgases von Verbrennungsmotoren in weniger schädliche zu verwandeln. Insbesondere sind hier die Abgasbestandteile NOx, CO und HC sowie Partikel zu nennen. Diese katalytische Aktivität wird nach Maßgabe des Fachmanns durch eine Beschichtung des Wandflussfilters mit einem katalytisch aktiven Material bereitgestellt. Unter dem Begriff des Beschichtens wird demgemäß das Aufbringen von katalytisch aktiven Materialien auf den Wandflussfilter verstanden. Die Beschichtung übernimmt die eigentliche katalytische Funktion. Vorliegend erfolgt die Beschichtung durch das Aufbringen einer entsprechend wenig viskosen wässrigen Suspension - auch Washcoat genannt - oder Lösung der katalytisch aktiven Komponenten auf den Wandflussfilter, siehe z. B. gemäß EP1789190B1. Nach dem Aufbringen der Suspension/Lösung wird der Wandflussfilter getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l. Die geeignetste Beladungsmenge eines in der Wand beschichteten Filters hängt von seiner Zelldichte, seiner Wandstärke und der Porosität ab. Bei gängigen mittelporösen Filtern (<60% Porosität) mit z.B. 200 cpsi Zelldichte und 8 mil Wandstärke liegt die bevorzugte Beladung bei 20 g/l bis 50 g/l (bezogen auf das äußere Volumen des Filtersubstrats). Hochporöse Filter (>60% Porosität) mit z.B. 300 cpsi und 8 mil haben eine bevorzugte Beladungsmenge von 25 g/l bis 150 g/l besonders bevorzugt von 50 g/l bis 100 g/l.

Im Prinzip sind alle dem Fachmann für den Autoabgasbereich bekannten Beschichtungen für die vorliegende Erfindung geeignet. Bevorzugt kann die katalytische Beschichtung des Filters ausgewählt sein aus der Gruppe bestehend aus Dreiwegkatalysator, SCR-Katalysator, Stickoxidspeicherkatalysator, Oxidationskatalysator, Rußzündbeschichtung. Hinsichtlich der einzelnen in Frage kommenden katalytischen Aktivitäten und deren Erklärung wird auf die Ausführungen in der WO2011151711A1 verwiesen. Besonders vorteilhaft besitzt dieser eine katalytisch aktive Beschichtung aufweisend mindestens einen metallionenausgetauschten Zeolithen, Cer/Zirkoniummischoxid, Aluminiumoxid und Palladium, Rhodium oder Platin oder Kombinationen dieser Edelmetalle.

Die hier verwendeten Pulver können erfindungsgemäß wie oben beschrieben als solche eingesetzt werden. Ebenfalls vorstellbar ist jedoch der Einsatz von trockenen, pyrogenen Metallverbindungen, insbesondere Oxidpulvern, und/oder nicht pyrogenen Metallverbindungen, insbesondere Oxiden, welche eine katalytische Aktivität im Hinblick auf die Abgasnachbehandlung tragen. Demzufolge kann das Pulver selbst ebenfalls hinsichtlich der Verminderung der Schadstoffe im Abgas eines Verbrennungsmotors katalytisch aktiv sein. Hierfür kommen alle dem Fachmann bekannten Aktivitäten in Betracht, wie z.B. TWC-, DOC-, SCR-, LNT- oder den Rußabbrand beschleunigende Katalysatoren. Gemeinhin wird das Pulver die gleiche katalytische Aktivität aufweisen, wie eine ggf. erfolgte katalytische Beschichtung des Filters. Hierdurch wird die katalytische Gesamtaktivität des Filters gegenüber nicht mit katalytisch aktivem Pulver beschichteten Filtern nochmals gesteigert. Insofern kann es sein, dass zum Beispiel pyrogenes Aluminiumoxid mit einem Edelmetall imprägniert für die Herstellung des Pulver-Gas-Aerosols herangezogen wird. Bevorzugt ist eine Dreiwege-Aktivität mit einer Beschichtung aufweisend Palladium und Rhodium sowie ein Sauerstoffspeichermaterial wie Cer-Zirkonoxid in diesem Zusammenhang. Ebenfalls vorstellbar ist, dass für die SCR-Reaktion katalytisch aktives Material eingesetzt wird. Dabei kann das Pulver zum Beispiel aus mit Übergangsmetallionen ausgetauschten Zeolithen oder Zeotypen bestehen. Ganz besonders bevorzugt ist der Einsatz von Eisen und/oder Kupfer ausgetauschten Zeolithen in diesem Zusammenhang. Äußerst bevorzugt wird als Material zur Herstellung des Pulver-Gas-Aerosols CuCHA (Kupfer ausgetauschtes Chabasit; http://europe.iza-structure.orq/IZA-SC/framework.php?STC=CHA) oder CuAEI (http://europe.iza-structure.orq/IZA-SC/framework.php?STC=AEI) verwendet. Weiterhin vorteilhaft kann eine Aktivität des Pulvers in der verbesserten Rußverbrennung liegen.

In einer weiteren Ausgestaltung bezieht sich die vorliegende Erfindung auf einen wie oben dargestellten Wandflussfilter. Die produktcharakteristischen Vorteile, welche weiter oben im Rahmen des erfindungsgemäßen Verfahrens beschrieben wurden, gelten mutatis mutandis auch für den erfindungsgemäßen Wandflussfilter.

Die erfindungsgemäßen Wandflussfilter können in jedweder Anwendung herangezogen werden, bei der feinpartikuläre Feststoffe aus Gasen abgetrennt werden müssen. Vorteilhaft findet dieser Prozess Anwendung im Bereich der Autoabgase, die mit feinverteilten Rußpartikeln aus der unvollständigen Verbrennung beaufschlagt sind. Die dargestellten Wandflussfilter können in einem Autoabgassystem mit anderen Katalysatoren ausgewählt aus der Gruppe bestehend aus TWC, SCR-Katalysator, Stickoxidspeicherkatalysator, Dieseloxidationskatalysator und anderen verwendet werden.

Der erfindungsgemäß hergestellte Wandflussfilter zeigt eine hervorragende Filtrationseffizienz bei nur moderatem Anstieg des Abgasgegendrucks verglichen mit einem nicht mit pyrogenen Pulver beaufschlagten Wandflussfilter im frischen Zustand. Je schlechter die Filtrationseffizienz des Filters ist, desto größer ist die Steigerung der Filtrationseffizienz durch die Beschichtung mit pyrogenen Metallverbindungen. Dies macht sich gerade bei Filtern bemerkbar, die zuvor mit einem Washcoat beschichtet wurden. Bevorzugt zeigt der erfindungsgemäße vorher mit Washcoat beschichtete Wandflussfilter eine relative Erhöhung der Filtrationseffizienz von mindestens 5 %, vorzugsweise mindestens 10 % und ganz besonders bevorzugt mindestens 20 % bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Pulver behandelten, frischen Filter. Besonders vorteilhaft ist eine Verbesserung der Filtrationseffizienz von mindestens 20 % bei einer maximalen Staudruckerhöhung von höchstens 10 %.

Die hier vorgestellten Wandflussfilter zeichnen sich durch eine gute Filtrationseffizienz gepaart mit einem sehr geringen Anstieg des Abgasgegendrucks aus. Es wird angenommen, dass die pyrogen hergestellten Metallverbindungen nach der Zerkleinerung während der Abscheidung im Filter erst wieder zu größeren Agglomeraten vernetzen. Sie bilden dann ein lockeres Netzwerk auf die Wand und/oder in den Poren. Vornehmlich die Partikelgröße der Agglomerate nach der beschriebenen Zerkleinerung, die Menge an Pulver, die Porendurchmesser und die offene Porosität des Filters legen fest, ob die Poren oder die Zellenoberfläche oder beides beschichtet werden. Durch das extrem lockere Haufwerk können die Gase ohne großen Druckverlust strömen. Die große äußere Oberfläche der pyrogenen Metallverbindungen bewirkt wiederum eine sehr gute Filtrationseffizienz für die Rußpartikel im Nanometerbereich. Es reichen sehr geringe Mengen an pyrogenen Oxiden, um große äußere Oberflächen zu erzeugen. Die üblicherweise in der Katalyse eingesetzten Oxide weisen große innere Oberflächen durch eine hohe Porosität im Nanometerbereich auf, diese sind aber für die Filtration von Nanopartikeln nicht zugänglich.

Trocken im Sinne der vorliegenden Erfindung bedeutet demgemäß den Ausschluss der Anwendung einer Flüssigkeit, insbesondere Wasser. Insbesondere die Herstellung einer Suspension des Pulvers in einer Flüssigkeit zur Verdüsung in einen Gasstrom sollte vermieden werden. Sowohl für den Filter als auch für das Pulver kann eine gewisse Feuchte ggf. tolerierbar sein, sofern das Erreichen des Ziels - die möglichst fein verteilte Abscheidung des Pulvers in oder auf der Eingangsoberfläche - nicht negativ beeinflusst wird. In der Regel ist das Pulver rieselfähig und durch Energieeintrag dispergierbar. Die Feuchtigkeit des Pulvers bzw. des Filters im Zeitpunkt der Beaufschlagung mit dem Pulver sollte weniger als 20 %, bevorzugt weniger als 10 % und ganz besonders bevorzugt weniger als 5 % (gemessen bei 20°C und Normaldruck ISO 11465 neueste Fassung am Anmeldetag) betragen.

In Fig. 1 wird die Flammenpyrolyse zur Erzeugung von pyrogenem Siliziumdioxid bildhaft dargestellt. Die sich primär bilden Partikel aggregieren in der Folge und lagern sich schließlich zu Agglomeraten (größere Ketten von Primärpartikeln) zusammen. File:Fumed silica process.svg. (2016, November 28). *Wikimedia Commons, the free media repository.* Retrieved 08:28, November 7, 2018 from https://commons.wikimedia.org/w/index.php?title=File:Fumed silica process.svg&oldid=222460038.

In der Fig. 2 wird das erfindungsgemäße Verfahren und die Zerkleinerungs- und Mischkammer näher erklärt: Das pyrogene Oxid 400 wird mit einem Gas 300 unter Druck unter starker Scherung durch die verschleißfreie Zerstäuberdüse 700 getrieben. Die Geschwindigkeit kann bis an die Schallgeschwindigkeit reichen. Das Gas-Pulvergemisch 500 trifft nach dem Austritt aus der Zerstäuberdüse auf die Prallplatte 600, die sich in der Zerkleinerungs- und Mischkammer 100 befindet. Das so entstandene Gas-Pulvergemisch mit den zerkleinerten Pulveragglomeraten wird dann mit dem Gasstrom 200 gemischt und geht dann als verdünntes Gas-Pulvergemisch 800 zur Beschichtung des Filters. Das Verdünnungsgas 200 wird benötigt, damit die Anströmgeschwindigkeit des Filters bei der Beschichtung unabhängig von der Menge an Zerstäubergas variiert werden kann.

Beispiel 1:

Beschichtung eines rohen washcoatfreien Filters mit den Abmessungen 4,66"x6,00" 300/8 mit Pulver.

Das pyrogen hergestellte Pulver wurde mit Hilfe einer Zerstäuberdüse bei 2 bar dispergiert und mit einer Geschwindigkeit von 20m/s in den Filter gesaugt.

| | relativer* Anstieg der Filtrationseffizienz | relativer* Druckanstieg |
|---|---|---|
| 0,6g pyrogenes $Al_2O_3$ / Liter Filtervolumen | 5,5% | 2% |
| 1,2g pyrogenes $Al_2O_3$ / Liter Filtervolumen | 9% | 3% |
| 0,3g pyrogenes $Al_2O_3$ + 1,2g $Al_2O_3$ mit einem d50 von 3$\mu$m / Liter Filtervolumen | 6% | 1% |
| *relativ gegenüber einem unbeschichteten rohen Filtersubstrat ohne zusätzliche Pulverbeschichtung | | |

Beispiel 2:

Der Filter wurde in einem 1sten Schritt mit 50g/l Washcoat in der porösen Filterwand beschichtet, getrocknet und kalziniert. Anschließend wurde er mit 2g/l pyrogen hergestelltem Pulver beschichtet. Das Pulver wurde mit Hilfe einer verschleißfreien Zerstäuberdüse bei 2 bar dispergiert und mit einer Geschwindigkeit von 20m/s in den Filter gesaugt. Die Filtrationseffizienzsteigerung und der Anstieg des Druckverlusts wurden bei 600m$^3$/h relativ zum pulverfreien Filter bestimmt.

| | relativer* Anstieg der Filtrationseffizienz | relativer* Druckanstieg |
|---|---|---|
| 2g pyrogenes Al2O3 / Liter Filtervolumen | 47% | 10% |
| *relativ gegenüber dem nur mit Washcoat beschichteten Substrat | | |

**Patentansprüche**

1. Verfahren zur Herstellung eines Wandflussfilters zur Reinigung von Gasen von kleinpartikulären Feststoffen, wobei der Einlassbereich des trockenen Filters mit einem trockenen Pulver-Gas-Aerosol beaufschlagt wird,
   **dadurch gekennzeichnet, dass**
   das Pulver eine pyrogene, durch eine Flammenhydrolyse oder Flammenoxidation aus einem Metallprecursor in einer Flamme hergestellte, hochschmelzende Metallverbindung aufweist und die Menge an pyrogener hochschmelzender Verbindung im Filter unter 5 g/l bezogen auf das Filtervolumen liegt.

2. Verfahren nach Anspruch 1,
   **dadurch gekennzeichnet, dass**
   die pyrogene hochschmelzende Verbindung ausgewählt ist aus der Gruppe bestehrend aus Siliziumdioxid, Aluminiumoxid, Titandioxid, Zirkondioxid, Ceroxid, Eisenoxid, Zinkoxid, Mischoxide aus den vorher genannten Oxiden oder deren Mischungen.

3. Verfahren nach einem der vorhergehenden Ansprüche,
**dadurch gekennzeichnet, dass**
die pyrogene hochschmelzende Verbindung vor der Beaufschlagung des Filters einer Scherkraft ausgesetzt wird.

4. Verfahren nach Anspruch 3,
**dadurch gekennzeichnet, dass**
die Scherkraft hervorgerufen wird durch eine oder mehrere Geräte ausgewählt aus der Gruppe bestehend aus verschleißfreie Zerstäuberdüse, Windsichter, Mühle und Prallplatte.

5. Verfahren nach einem der vorhergehenden Ansprüche,
**dadurch gekennzeichnet, dass**
die mittlere Partikelgröße (d50) der pyrogenen hochschmelzenden Verbindung zwischen 0,1 $\mu$m und 50 $\mu$m liegt.

6. Verfahren nach einem der vorhergehenden Ansprüche,
**dadurch gekennzeichnet, dass**
die pyrogene hochschmelzende Verbindung eine BET-Oberfläche von > 50 m$^2$/g aufweist.

7. Verfahren nach einem der vorhergehenden Ansprüche,
**dadurch gekennzeichnet, dass**
der pyrogenen hochschmelzenden Verbindung im Pulver-Gas-Aerosol mit weiteren nichtpyrogenen hochschmelzenden Verbindungen gemischt werden.

8. Verfahren nach einem der vorhergehenden Ansprüche,
**dadurch gekennzeichnet, dass**
der Wandflussfilter vor der Beaufschlagung mit der pyrogenen hochschmelzenden Verbindung katalytisch beschichtet worden ist.

9. Verfahren nach einem der vorhergehenden Ansprüche,
**dadurch gekennzeichnet, dass**
die pyrogene und/oder die nichtpyrogenen Verbindung selbst katalytisch aktiv sind.

10. Wandflussfilter erhältlich durch ein Verfahren nach einem der vorhergehenden Ansprüche.

11. Verwendung eines Wandflussfilters gemäß Anspruch 10 für die Reinigung von Autoabgasen.

**Claims**

1. Method for producing a wall-flow filter for purifying gases from small particulate solids, wherein a dry powder/gas aerosol is applied to the inlet region of the dry filter,
**characterized in that**
the powder contains a pyrogenic, high-melting metal compound produced by flame hydrolysis or flame oxidation from a metal precursor in a flame, and the amount of pyrogenic high-melting compound in the filter is less than 5 g/l, in relation to the filter volume.

2. Method according to Claim 1,
**characterized in that**
the pyrogenic high-melting compound is selected from the group consisting of silicon dioxide, aluminum oxide, titanium dioxide, zirconium dioxide, cerium oxide, iron oxide, zinc oxide, mixed oxides of the aforementioned oxides or mixtures thereof.

3. Method according to any one of the preceding claims,
**characterized in that**
the pyrogenic high-melting compound is subjected to a shear force prior to the application to the filter.

4. Method according to Claim 3,
**characterized in that**
the shear force is caused by one or more devices selected from the group consisting of a wear-free atomizer nozzle, a wind sifter, a mill and a baffle plate.

5.  Method according to any one of the preceding claims,
    **characterized in that**
    the average particle size (d50) of the pyrogenic high-melting compound is between 0.1 $\mu$m and 50 $\mu$m.

6.  Method according to any one of the preceding claims,
    **characterized in that**
    the pyrogenic high-melting compound has a BET surface area of > 50 m$^2$/g.

7.  Method according to any one of the preceding claims,
    **characterized in that**
    the pyrogenic high-melting compound in the powder/gas aerosol is mixed with further non-pyrogenic high-melting compounds.

8.  Method according to any one of the preceding claims,
    **characterized in that**
    the wall-flow filter has been catalytically coated prior to application of the pyrogenic high-melting compound.

9.  Method according to any one of the preceding claims,
    **characterized in that**
    the pyrogenic and/or non-pyrogenic compounds themselves are catalytically active.

10. Wall-flow filter obtainable by a method according to any one of the preceding claims.

11. Use of a wall-flow filter according to Claim 10 for the purification of automobile exhaust gases.


**Revendications**

1.  Procédé de fabrication d'un filtre à parois poreuses destiné à la purification des gaz des particules solides fines, la zone d'entrée du filtre sec étant soumise à un aérosol pulvérulent gazeux sec,
    **caractérisé en ce que**
    la poudre comporte un composé métallique pyrogène, à point de fusion élevé, fabriqué par une hydrolyse à la flamme ou une oxydation à la flamme à partir d'un précurseur métallique dans une flamme et la quantité de composé pyrogène à point de fusion élevé dans le filtre est inférieure à 5 g/l par rapport au volume du filtre.

2.  Procédé selon la revendication 1,
    **caractérisé en ce que**
    le composé pyrogène à point de fusion élevé est choisi dans le groupe constitué de l'oxyde de silicium, oxyde d'aluminium, dioxyde de titane, dioxyde de zirconium, oxyde de cérium, oxyde de fer, oxyde de zinc, oxydes mélangés à partir des oxydes précités ou leurs mélanges.

3.  Procédé selon l'une quelconque des revendications précédentes,
    **caractérisé en ce que**
    le composé pyrogène à point de fusion élevé est exposé à une force de cisaillement avant l'application du filtre.

4.  Procédé selon la revendication 3,
    **caractérisé en ce que**
    la force de cisaillement est provoquée par un ou plusieurs appareils choisis dans le groupe constitué d'une buse de pulvérisation sans usure, d'un séparateur pneumatique, d'un moulin et d'un déflecteur.

5.  Procédé selon l'une quelconque des revendications précédentes,
    **caractérisé en ce que**
    la taille moyenne de particules (d50) du composé pyrogène à point de fusion élevé se trouve entre 0,1 $\mu$m et 50 $\mu$m.

6.  Procédé selon l'une quelconque des revendications précédentes,
    **caractérisé en ce que**

le composé pyrogène à point de fusion élevé comporte une surface spécifique BET de > 50 m$^2$/g.

7. Procédé selon l'une quelconque des revendications précédentes,
**caractérisé en ce que**
le composé pyrogène à point de fusion élevé est mélangé dans l'aérosol pulvérulent gazeux avec d'autres composés non pyrogènes à point de fusion élevé.

8. Procédé selon l'une quelconque des revendications précédentes,
**caractérisé en ce que**
le filtre à parois poreuses a été revêtu catalytiquement avant l'application avec le composé pyrogène à point de fusion élevé.

9. Procédé selon l'une quelconque des revendications précédentes,
**caractérisé en ce que**
les composés pyrogène et/ou non pyrogène sont actifs par voie auto-catalytique.

10. Filtre à parois poreuses pouvant être obtenu par le procédé selon l'une quelconque des revendications précédentes.

11. Utilisation d'un filtre à parois poreuses selon la revendication 10 pour la purification des gaz d'échappement automobiles.

Fig. 1

SiCl$_4$ + 2H$_2$ + O$_2$    Reaktion bei > 1500°C    SiO$_2$ + 4HCl

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- WO 2005016497 A1
- EP 1789190 B1
- WO 2012030534 A1

- US 8388721 B2
- EP 2727640 A1
- EP 2502661 A1
- EP 2502662 B1
- US 8277880 B2
- WO 2011151711 A1
- EP 1576998 A2
- US 9745227 B2
- WO 18115900 A1
- US 1967235 A
- US 2488440 A
- DE 948415 C
- DE 952891 C

**In der Beschreibung aufgeführte Nicht-Patentliteratur**

- **R. HECK et al.** Catalytic Air Pollution Control - Commercial Technology. Wiley, 2002, vol. 2, 87
- **GUTSCH A. et al.** *KONA,* 2002
- **LI S. et al.** *Progress in Energy and Combustion Science,* 2016, vol. 55
- **ULRICH G.** *Combsution Science and Technology,* 1971, vol. 4

- **IHALAINEN, M. ; LIND, T. ; ARFFMAN, A. ; TORVELA, T. ; JOKINIEMI, J.** *Aerosol Science and Technology,* 2014, vol. 48 (1), 31-41
- **M. ROTHENBACHER ; S. KIRCHHOFF ; M. SCHMID ; H.-J. KASPER ; G. WEBER.** *Journal of Nanoparticle Research,* vol. 12 (6), 2037-2044
- *Chemie Ingenieur Technik,* 2011, vol. 83 (8), 1262-1275